(19) Europäisches Patentamt
European Patent Office
Office européen des brevets

(11) **EP 2 214 806 B1**

(12) **EUROPÄISCHE PATENTSCHRIFT**

(45) Veröffentlichungstag und Bekanntmachung des Hinweises auf die Patenterteilung:
**25.04.2012 Patentblatt 2012/17**

(21) Anmeldenummer: 08853033.2

(22) Anmeldetag: **29.10.2008**

(51) Int Cl.:
*B01D 53/22* *(2006.01)*   *F23L 7/00* *(2006.01)*
*F23L 15/00* *(2006.01)*   *F23C 9/00* *(2006.01)*

(86) Internationale Anmeldenummer:
**PCT/DE2008/001763**

(87) Internationale Veröffentlichungsnummer:
**WO 2009/065374 (28.05.2009 Gazette 2009/22)**

(54) **MEMBRAN-KRAFTWERK UND VERFAHREN ZUM BETREIBEN EINES SOLCHEN**

POWER PLANT THAT USES A MEMBRANE AND MOTHOND FOR OPERATING THE SAME

CENTRALE ÉLECTRIQUE À MEMBRANE, ET PROCÉDÉ POUR FAIRE FONCTIONNER UNE TELLE CENTRALE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.11.2007 DE 102007056841**

(43) Veröffentlichungstag der Anmeldung:
**11.08.2010 Patentblatt 2010/32**

(73) Patentinhaber: **Forschungszentrum Jülich GmbH 52425 Jülich (DE)**

(72) Erfinder:
• **MEULENBERG, Wilhelm, Albert NL-6294 AA Vijlen (NL)**
• **BAUMANN, Stefan 52078 Aachen (DE)**
• **BLUM, Ludger 52428 Jülich (DE)**
• **RIENSCHE, Ernst 52428 Jülich (DE)**

(56) Entgegenhaltungen:
**EP-A- 1 172 135        EP-A- 1 952 874**
**US-A- 5 753 007        US-A1- 2002 073 844**
**US-A1- 2004 002 030**

**Beschreibung**

Die Erfindung betrifft ein Kraftwerk sowie ein Verfahren zum Betreiben dieses Kraftwerkes. Bei dem Kraftwerk handelt es sich dabei um ein Membrankraftwerk mit einer Hochtemperatur-$O_2$-Membran.

Stand der Technik

Die Abtrennung von $CO_2$ aus typischen Kohlekraftwerksprozessen ist grundsätzlich über drei verschiedene Konzepte erzielbar.

Post-Combustion-Capture:

Hierbei wird ein konventionelles Dampfkraftwerk mit Kohle und Luft gespeist. Es schließt sich eine herkömmliche Rauchgasreinigung an. Die Abtrennung von $CO_2$ aus dem Rauchgas nach der Verbrennung wird durch geeignete Wäschen bzw. langfristig durch Membransysteme realisiert. Der Nachteil dieses Verfahrens liegt darin, dass hohe Volumenströme an Rauchgas mit vergleichsweise geringer $CO_2$-Konzentration gereinigt werden müssen. Membranen zur Abtrennung des $CO_2$ werden deshalb einen hohen Bedarf an Membranfläche aufweisen. Typische Verfahrensparameter für das zu behandelnde Rauchgas wären: 1000 m³/s mit 18 Vol.% $CO_2$.

Pre-Combustion-Capture:

Hier wird von einem IGCC (= Integrated Gasification Combined Cycle)-Verfahren ausgegangen, bei dem die Abtrennung von $CO_2$ in einem Zwischenschritt nach der Kohlevergasung, bzw. der Erdgasreformierung und nach den Prozessschritten der Gasreinigung und Gaskonditionierung (CO-Shift) erfolgt, aber noch vor der Verbrennung mit Luft. Die verschiedenen bisher entwickelten Kohlevergasungsverfahren werden bevorzugt mit Sauerstoff oder angereicherter Luft (und Dampf) unter Druck mit ca. 20 bis 30 bar betrieben. Deshalb weist das Kohlegas im Hinblick auf eine $CO_2$-Abtrennung zwei entscheidende Vorteile auf. Zum einen ist der reale Volumenstrom mit wenig Stickstoff und bei hohem Druck etwa um das 100-fache geringer als bei den Rauchgasen üblicher Dampfkraftwerke. Dies führt unmittelbar zu hohen Partialdrücken der Hauptkomponenten CO und $H_2$.

Nach einer zusätzlichen CO-Konvertierung nach $CO_2$ und $H_2$ mittels Dampfzufuhr (Shiftreaktor) zur Konditionierung des Kohlegases für eine $CO_2$-Abtrennung eröffnen sich zwei Optionen, einerseits die Abtrennung von $CO_2$, beispielsweise mit einem Wäscher oder die Abtrennung einer hinreichenden Menge $H_2$ mittels einer Membran, wobei im Retentat ein $CO_2$-reiches Gas zurückbleibt, das geeignet ist für eine Verflüssigung und Speicherung. Bei beiden Optionen kann der Wasserstoff anschließend in einem Gas und Dampfkraftwerk (GuD-Prozess), beispielsweise mit Hilfe einer $H_2$-Turbine verstromt werden. Typische Verfahrensparameter nach der Gasreinigung wären: 10 m³/s mit 45 Vol.% $CO_2$.

OXYFUEL-Prozess:

Hier erfolgt eine einfache $CO_2$-Abtrennung durch Kondensation nach Verbrennung der Kohle in einem Kessel mit reinem Sauerstoff und dem sich daran anschließenden Schritt einer Rauchgasreinigung. Dieses Verfahren hat einen entscheidenden Vorteil. Verbrennung in reinem Sauerstoff liefert als Verbrennungsprodukte nur $CO_2$ und Wasserdampf, der beim Abkühlen des Gasgemisches auf sehr einfache Weise durch Kondensation vom $CO_2$ getrennt werden kann. Das $CO_2$ und der Wasserdampf werden vorteilhaft im Kreislauf geführt, und zusammen mit dem Sauerstoffstrom dem Kessel wieder zugeführt. Der reine Sauerstoff kann dabei entweder durch eine konventionelle kryogene Luftzerlegung erzeugt werden oder mittels einer $O_2$-Membran, wobei das rückgeführte (zirkulierte) $CO_2$/Wasserdampfgemisch als Spülgas dienen kann.

In allen drei Fällen gibt es jedoch noch kein sehr gut funktionierendes Konzept für die jeweilige $CO_2$-Abtrennung.

Ein großes Entwicklungspotential wird Hochtemperatur-$O_2$-Membranen zugesprochen, insbesondere aufgrund von energetischen Gesichtspunkten. Voraussetzung dafür ist, dass kostengünstige Membranen zur Verfügung stehen.

Hier können so genannte dichte Mischleiter z. B. Perowskite eingesetzt werden. Bei diesen erfolgt die Gastrennung $O_2$/$N_2$ nicht über die Trennwirkung von Poren, sondern über die besonderen Transportmechanismen im Bulkmaterial. Sauerstoffionen wandern in Richtung ihres Konzentrationsgradienten. An der Membranoberfläche verlassen die Elektronen das Sauerstoffion und wandern zurück.

Die Herausforderungen bei der Membran- und Membranmodul-Entwicklung sowie bei der Konzeptentwicklung sind dabei ein möglichst hoher Abtrenngrad, eine möglichst hohe Reinheit der abgetrennten Komponente sowie ein möglichst geringer Energieaufwand bei der Konditionierung des Feedgases und des Permeatstromes, z. B. durch Druckanhebung oder Vakuum. Damit soll eine geringe Einbuße beim Netto-Wirkungsgrad bei gleichzeitig möglichst hoher Flussdichte der permeierenden Komponente bewirkt werden. Gleichzeit stehen ein geringer Flächenbedarf der Membran und ein möglichst geringer apparativer Aufwand in der Membranumgebung im Vordergrund, die nur geringe zusätzliche Investitionskosten erfordern. Schließlich wird ein Modul- und Verfahrenskonzept angestrebt, welches zudem die hohen Anforderungen an Stabilität und Lebensdauer in Anbetracht der hohen Betriebstemperatur erfüllt.

Diese vorgenannten Forderungen sind sehr komplex und teilweise gegenläufig. Hohe Ansprüche werden daher einerseits an die eingesetzten Membranen in Form von hoher Permeabilität und Selektivität gestellt, und andererseits an die Verfahrenstechnik in Form der Bereitstellung günstiger Prozessbedingungen längs eines optimalen Membrantrennprozesses bei geringem zusätzlichen verfahrenstechnischen Aufwand.

Bei dieser Aufgabenstellung sind insbesondere drei fundamentale Randbedingungen zu beachten:

1. Für nicht-poröse, dichte mischleitende $O_2$-Membranen gilt ein Gesetz (Wagner-Gleichung), wonach die lokalen $O_2$-Permeatstromdichten proportional zum natürlichen Logarithmus der jeweiligen Partialdruckverhältnisse der permeierenden Komponente $O_2$ sind (Feedseite / Permeatseite der Membran). Nur bei sehr dünnen Membranen kommen zu diesem Bulk-Transportmechanismus noch Oberflächeneffekte hinzu, wodurch die Abhängigkeit von den Druckverhältnissen dann weniger deutlich ausgeprägt ist.

2. Hinsichtlich der erforderlichen Reinheit des $O_2$-Produktstromes sind im Gegensatz zu porösen Membranen keine besonderen Maßnahmen erforderlich, denn die $O_2/N_2$-Selektivität dichter, mischleitender Membranen ist naturgemäß exzellent und liegt in der Größenordnung von 100:1 oder höher.

3. Die unvermeidlich hohe Membran-Betriebstemperatur von typischerweise 800°C ist konstruktiv und konzeptionell eine besonders große Herausforderung. Diese wird bei solchen Kraftwerkskonzepten noch weiter verschärft, bei denen ein Druckbetrieb an der Hochtemperatur-Membran und den Hochtemperatur-Wärmetauschern der Membranumgebung angestrebt wird.

Da bislang noch kein Membran-Kraftwerk existiert, erschöpft sich der Stand der Technik in Konzeptvorschlägen aus der Literatur. Die Konzeptentwicklungen stehen noch am Anfang. In der Literatur findet man Prinzipschaltungen, wobei jeweils nur eine einzelne spezielle Membran betrachtet wird. Auch bei gestuften Prozessen erfolgen die an den jeweiligen Gasströmen der Kaskadenstufen durchzuführenden Trennungen mit nur jeweils einer Membran. In dieser einzelnen Membran fällt zwar der Partialdruck der permeierenden Komponente kontinuierlich ab, jedoch sind Feeddruck und Permeatdruck konstant über der gesamten Membranlänge, sofern kein Spülgas verwendet wird. Diese Drücke können gegebenenfalls mittels Kompressor bzw. Vakuumpumpe eingestellt werden.

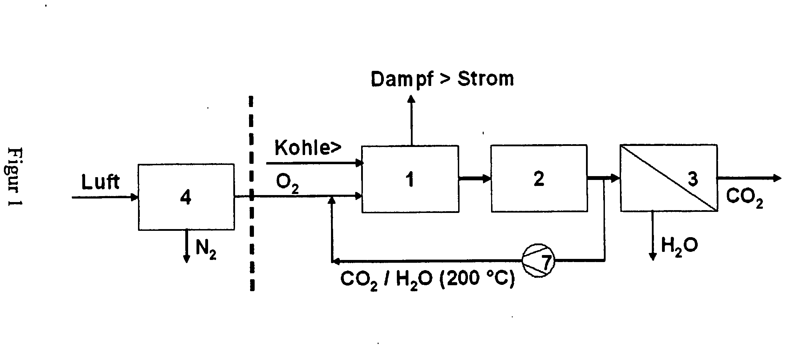

Als Stand der Technik ist das folgende Konzept für eine Oxyfuel-Kraftwerks-technik mit konventioneller $O_2$-Abtrennung aus der Luft, der so genannten kryogenen Luftzerlegungsanlge (LZA) von Vattenfall, bekannt. Eine 30 MWth-Anlage wird derzeit gebaut. Figur 1 zeigt das Prinzipschaltbild eines solchen Oxyfuel-Kraftwerkes mit vorgeschalteter Luftzerlegungsanlage.

Im Oxyfuel-Prozess wird die Kohle nicht mit Luft, sondern in einer Atmosphäre aus reinem Sauerstoff und rezykliertem Rauchgas verbrannt. In nachfolgenden Behandlungsschritten fällt, wie im konventionellen Kraftwerksprozess, Asche aus. Es folgt die Entstaubung und Abtrennung der Flugasche. Ein großer Teil, bis zu 75 %, des bei der Verbrennung entstehenden Rauchgases wird beim Oxyfuel-Prozess in Form von $CO_2$ und Wasserdampf in den Kessel zurückgeführt. Schwefelverbindungen werden dem Rauchgasstrom in Form von Gips als Nebenprodukt durch die Entschwefelung entzogen. Schließlich wird der restliche, mit der Kohle eingetragene Wasserdampf auskondensiert, so dass das restliche Rauchgas aus annähernd reinem $CO_2$ besteht. Das Kohlendioxid kann dann für eine weitere Verwendung und/oder Speicherung auf über 100 bar verdichtet werden.

Nachteilig ist bei diesem Konzept der hohe Energiebedarf der kryogenen Luftzerlegungsanlage (LZA), wodurch eine Wirkungsgradeinbuße von mindestens 10 %-Punkten (inkl. $CO_2$-Verflüssigung) zu erwarten ist. Beispielsweise weist ein Braunkohle-Kraftwerk nach heutigem Stand der Technik einen Netto-Wirkungsgrad von 43 % auf. Würde man nun auf Basis dieser Technik zum Oxyfuel-Prozess mit der kryogenen Luftzerlegungsanlage übergehen, so wäre ein Wirkungsgrad von nur noch 35 % wahrscheinlich.

Eine mögliche Variante der Oxyfuel-Kraftwerkstechnik mit $O_2$-Membran wird derzeit im Projekt OXYCOAL-AC entwickelt. Charakteristisch ist die Membran-Betriebsweise mit zwei verfahrenstechnischen Maßnahmen zur Erzielung hoher Triebkräfte für den Permeatstrom. Erstens wird die Luft auf der Feedseite auf ca. 20 bar verdichtet, um die $O_2$-Partialdrücke auf ca. 2 bis 4 bar zu erhöhen, und zweitens wird eine Rauchgas-Spülung im Gegenstrom auf der Permeatseite (1 bar) zur Senkung der $O_2$-Partialdrücke (ca. 30 - 300 mbar) eingesetzt. Daraus ergibt sich der Vorteil hoher lokaler $O_2$-Partialdruckverhältnisse von typischerweise 13:1 (4 bar / 0,3 bar) und darüber.

Aus US 2004/0002030 A1 ist ein solcher OXYFUEL-Prozess bekannt, bei dem anstelle der kryogenen Luftzerlegung eine Hochtemperaturmembran eingesetzt wird, die den für die Verbrennung notwenigen Sauerstoff zur Verfügung stellt. Während der Feedseite der Membran verdichtete Luft zugeführt wird, wird auf der Permeatseite der Hochtemperaturmembran heißes Rauchgase aus der Verbrennung als Spülgas eingesetzt.

Andererseits ergibt sich aus dem Druckbetrieb und der Rauchgas-Membranspülung eine Vielzahl von Nachteilen, die wie folgt aufgelistet werden können:

- zwei große Mengenströme müssen beide mit Membranbetriebstemperatur in die Membran eintreten, da sonst die Membrantemperatur nicht aufrecht erhalten werden kann;
- eine heiße Rauchgas-Rückführung bedingt einen großen Rückführ-Mengenstrom, da die Kühlwirkung in der Regel nicht effektiv ist;
- es ist eine Heißgasreinigung erforderlich;
- das hohe Druckgefälle Feedseite/Permeatseite der Membran führt zu sehr hohen Stabilitätsanforderungen an den Membranmodul;

- das hohe Druckgefälle Feedseite/Permeatseite der Membran führt zu sehr hohen Stabilitätsanforderungen an den Hochtemperatur-Rekuperativ-Wärmetauscher für die Luftvorwärmung;
- die Reste der Verbrennungsprodukte gelangen an die Permeatseite der Membran;
- die permeatseitige $CO_2$-Atmosphäre limitiert die Membranwahl, z. B. zeigen Bariumhaltige Perowskit-Membranen höchste $O_2$-Flussdichten, weisen aber in $CO_2$-Atmosphäre Stabilitätsprobleme auf.

Eine Weiterentwicklung dazu stellt das aus US 5,753,007 bekannte Verfahren zur Bereitstellung von reinem Sauerstoff dar, bei denen ebenfalls eine Hochtemperaturmembran zur Abtrennung von reinem Sauerstoff aus verdichteter Luft (2 bis 35 bar) eingesetzt wird. Permeatseitig wird auf Spülgas verzichtet, wodurch sich auf Grund des hohen Druckgefälles über die Membran zwar vorteilhaft eine hohe Triebkraft einstellt, andererseits jedoch die Membran dadurch auch hohen Anforderungen an die mechanische Stabilität genügen muss. Der abgetrennte Sauerstoff kann je nach weiterer Anwendung im Anschluss abgekühlt und/oder verdichtet werden.

Auch in der EP 1 172 135 A1 wird ein Verfahren und eine Vorrichtung zur Abtrennung von Sauerstoff aus Luft mit Hilfe einer Hochtemperaturmembran zum Einsatz in einem Verbrennungsprozess beschrieben, wobei ebenfalls auf ein Spülgas auf der Permeatseite verzichtet wird. Durch den Einsatz von zuvor verdichteter Luft auf der Feedseite ergeben sich dieselben Schwierigkeiten und Stabilitätsanforderungen an die Membran wie vorgenannt.

### Aufgabe und Lösung der Erfindung

Aufgabe der Erfindung ist es, eine Prozessführung für das Betreiben eines Oxyfuel-Kraftwerks mit einer $O_2$-Membran bereit zu stellen, die die vorgenannten Nachteile überwindet, d. h. einen möglichst geringen appartiven Aufwand in der Membranumgebung verursacht. Dabei bleiben die Grundanforderungen an den Prozess erhalten, wie beispielsweise ein möglichst hoher Abtrenngrad von $CO_2$ aus dem Rauchgas, eine möglichst hohe Reinheit der abgetrennten Komponente bei einem möglichst geringen Energieaufwand, d. h. einen möglichst hohen Netto-Wirkungsgrad.

Zudem sollte das Verfahren des Trennprozesses eine möglichst hohe Flussdichte der permeierenden Komponente ermöglichen. Ferner ist es die Aufgabe des Verfahrens, eine zur Durchführung des vorgenannten Verfahrens geeignete Vorrichtung zu schaffen.

Die Aufgaben der Erfindung werden gelöst durch ein Verfahren zum Betreiben eines Oxyfuel-Kraftwerks mit einer Hochtemperatur-$O_2$-Membran gemäß Anspruch 1 sowie durch eine Vorrichtung gemäß Anspruch 5. Vorteilhafte Ausgestaltungen des Verfahrens und der Vorrichtung finden sich in den darauf rückbezogenen Ansprüchen wieder.

### Gegenstand der Erfindung

Die Erfindung basiert auf dem Konzept des Oxycoal-Prozesses, bei dem Kohle mit reinem Sauerstoff verbrannt wird, das Abgas heiß gereinigt und das $CO_2$ nach Abkühlung abgetrennt wird, während das restliche heiße Rauchgas einer Hochtemperatur-$O_2$-Membran zugeführt wird. Der benötigte Sauerstoff wird durch Abtrennung aus verdichteter Luft über diese Membran erhalten. Das mit Sauerstoff angereicherte Rauchgas wird anschließend wieder der Verbrennung zugeleitet.

Anders als bei dem vorgenannten Prozess wird jedoch die folgende Betriebsweise vorgeschlagen. Die Feedseite der $O_2$-Membran wird mit atmosphärischer Luft betrieben. Die Vorwärmung erfolgt über nahezu den gesamten Temperaturbereich rekuperativ, typischerweise im Bereich von 20 bis 750°C. Dabei ist regelmäßig nur eine geringe Erdgas-Zufuhr für eine End-Vorwärmung von ca. 750 auf 800°C erforderlich. Eine Alternative dazu könnte die End-Vorwärmung der Luft im Dampferzeuger darstellen. Sinnvolle Membrantemperaturen liegen aus heutiger Sicht zwischen 700 und 1000 °C.

Auf eine Spülung der Membran auf der Permeatseite mit rückgeführtem Rauchgas wird verzichtet, da dieses in der Regel Reste an Verbrennungsprodukten aus der Kohleverbrennung enthält, die sich nachteilig auf die Membran auswirken können.

Dementsprechend wird nun erfindungsgemäß die Permeatseite mit Vakuum beaufschlagt, um auf dieser Membranseite niedrigere $O_2$-Partialdrücke im Betrieb zu realisieren als auf der Feedseite vorhanden sind. Großtechnisch kann beispielsweise ein Vakuum-Druckniveau von 30 mbar mit einer konventionellen Vakuumpumpe erzeugt werden. Diese leitet den Sauerstoff dann mit Atmosphärendruck (1 bar) in den Oxyfuel-Block.

Im Vergleich zum Oxycoal-AC-Konzept treten bei der erfindungsgemäßen Betriebsweise nachteilig geringere $O_2$-Partialdruckverhältnisse an der Membran auf, typischerweise im Bereich von 3:1 bis 7:1, anstelle der sonst auftretenden Verhältnisse von ca. 13:1 und 67:1.

Dafür ist es aber mit der Erfindung vorteilhaft möglich, alle oben genannten technischen Probleme eines Konzeptes mit Druckbetrieb und Membran-Rauchgas-spülung zu beseitigen. Die Vorwärmung der Luft kann nun über nahezu den gesamten Temperaturbereich auf einfache Weise repurativ erfolgen (typischerweise 20 - 750°C), bei einheitlichem Druckniveau der Zu- und Abluft. Bei den Membran-Kraftwerkskonzepten mit Druckbetrieb auf der Feedseite der Membran ist zwangsläufig eine anschließende Entspannung vorhanden, die eine Abkühlung nach sich zieht. In diesen Fällen muss eine andere große Wärmequelle gefunden oder bereitgestellt werden, z. B. heißes Rückführ-Rauchgas oder die Kohleverbrennung unmittelbar im Dampferzeuger.

Im Vakuumbereich der Gasführung sind untolerierbar hohe Druckverluste nicht zu befürchten, da die

$O_2$-Gasmenge im Vergleich zur Luftmenge etwa um den Faktor 10 geringer ist. Die $O_2$-Erzeugung ist nun stofflich nicht mehr integriert in den Oxyfuel-Verbrennungsprozess. Das bedeutet für die Entwicklung des Gesamtkraftwerkes:

1. Der $O_2$-Membran-Block kann separat entwickelt werden, wobei lediglich der MembranModul heute noch nicht verfügbar ist.
2. Nach Entwicklung des Oxyfuel-Blockes, z. B. bei VATTENFALL (zunächst mit der Luftzerlegungsanlage), wobei ausschließlich verfügbare Kraftwerkskomponenten aneinander angepasst werden, kann der Zusammenschluss zu einem Oxycoal-Membrankraftwerk erfolgen.

Das Absaugen von $O_2$ mittels Vakuumpumpe ist vergleichbar dem Absaugen von $CO_2$ beim Post-combustion-Kraftwerk mit $CO_2$-Membran am kalten Rauchgasende. So lassen erste Abschätzungen zum Energiebedarf der Vakuumpumpe erwarten, dass die Wirkungsgradeinbuße (inkl. $CO_2$-Verflüssigung) bei ca. 6 % liegen wird (Vakuumpumpe und $CO_2$-Verflüssigung etwa mit gleichen Anteilen).

Spezieller Beschreibunsgteil

Die Erfindung wird nachfolgend anhand einiger Figuren und Beispielrechnungen näher erläutert, ohne dass dadurch eine Einschränkung auf die vorgenannten Ausführungsformen gesehen wird.

In den Figuren 1 bis 3 bedeuten:

1 Dampfkessel,
2 Reinigung des Abgases, in der Regel umfassend Entstaubung und Entstickung,
3 Kondensation des Rauchgases,
4 Luftzerlegungsanlage
5 Hochtemperatur-$O_2$-Membran (OTM = Oxygen Transport Membrane)
6 rekuperativer Wärmetauscher
7 Kreislaufgebläse
8 Kompressor, Vakuumpumpe

(A) optionale Heizung, z. B. ein Brenner

In Figur 1 ist das Konzept des Oxyfuel-Prozesses dargestellt. Die Kohle wird in einer Atmosphäre aus reinem Sauerstoff und rezykliertem Rauchgas im Verbrennungskessel (1) verbrannt. Aus dem erzeugten Dampf wird Strom erzeugt. Das Verbrennungsabgas wird in nachfolgenden Reinigungsschritten (2) entstaubt und entstickt. Der größte Teil des bei der Verbrennung entstehenden Rauchgases wird in Form von $CO_2$ und Wasserdampf mit Temperaturen um 200 °C in den Verbrennungskessel (1) zurückgeführt. Der restliche, mit der Kohle eingetragene Wasserdampf wird auskondensiert (3), so dass annähernd reines $CO_2$ abgetrennt werden

kann. Der eingesetzte Sauerstoff wird in einer Luftzerlegungsanlage (4) kryogen erzeugt.

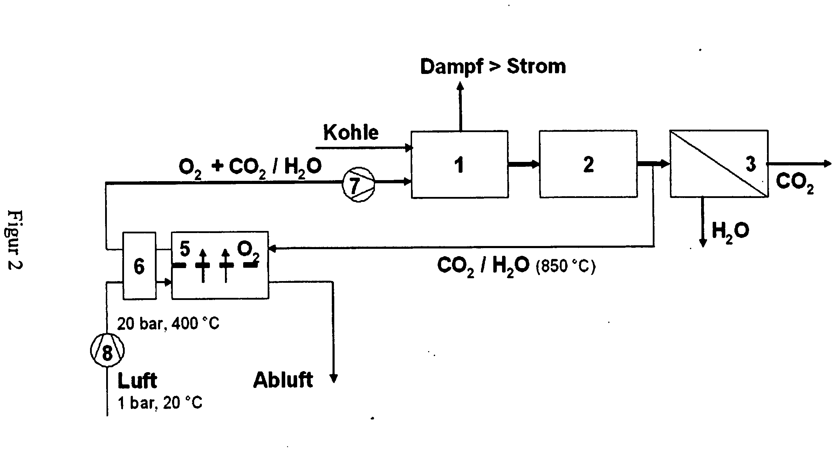

Figur 2 stellt das Oxycoal-Verfahren dar. Auch hier wird die Kohle in einer Atmosphäre aus reinem Sauerstoff und rezykliertem Rauchgas im Verbrennungskessel (1) verbrannt. Aus dem erzeugten Dampf wird Strom erzeugt. Das Verbrennungsabgas wird in nachfolgenden Reinigungsschritten (2) heiß entstaubt und entstickt. Das Rauchgas wird in Form von $CO_2$ und Wasserdampf nunmehr jedoch einer Hochtemperatur-$O_2$-Membran (5) zugeführt, in der das Rauchgas mit Sauerstoff angereichert wird. Der Sauerstoff wird dabei der Luft entzogen, welche zunächst durch einen Kompressor (8) auf 20 bar verdichtet wird. Die Luft erwärmt sich dabei auf ca. 400 °C. Ein rekuperativer Wärmetauscher (6) wärmt dabei die der Hochtemperatur-$O_2$-Membran zugeführte Luft mit Hilfe des aus der Membran austretenden Rauchgases auf ca. 750 °C vor. Die abgereicherte Luft wird wieder entspannt und abgeleitet. Das mit Sauerstoff angereicherte Rauchgas gelangt wieder in den Verbrennungskessel (1) zurück.

Nachteilig entstehen bei der heißen Rauchgasrückführung große Mengen an zu reinigendem Gas. Der Wärmetauscher muss für Drücke bis 20 bar und für Differenzdrücke bis 19 bar ausgelegt sein. Zudem gelangen mit dem Rauchgas auch nachteilig Verbrennungsprodukte an die Sauerstoff-Membran und der hohe $CO_2$-Anteil im Rauchgas wirkt sich zudem limitierend auf die Membranauswahl aus.

Als Beispiele für die Verhältnisse in der Hochtemperatur-$O_2$-Membran können folgende Richtwerte angegeben werden:

| $P_{O_2}^{Feed}$ | 4 | 3 | 2 | bar |
|---|---|---|---|---|
| $P_{O_2}^{Permeat}$ | 0,3 | 0,15 | 0,03 | bar |

Das Verhältnis der Sauerstoffpartialdrücke ($p_{O_2}^{feed}$ zu $p_{O_2}^{permeat}$) in der Membran liegt dabei zwischen 10:1 und 80:1, wobei insbesondere die im Permeat-Austrittsbereich noch hohen Werte zwischen 15:1 und 20:1 als besonders vorteilhaft angesehen werden.

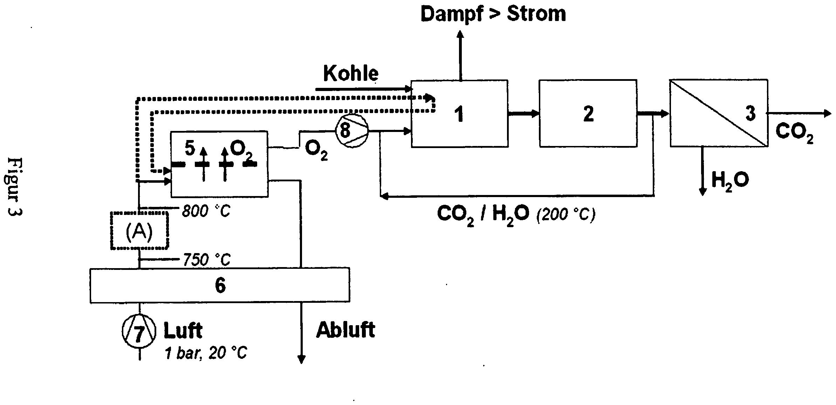

In der Figur 3 wird das Konzept der erfindungsgemäßen Betriebsführung eines mit Kohle betriebenen Kraftwerkes dargestellt. Ähnlich wie beim Oxycoal-Prozess wird zur Erzeugung des notwendigen Sauerstoffs eine Hochtemperatur-$O_2$-Membran (5) eingesetzt. Zur Vermeidung der vorgenannten Nachteile wird das Rauchgas jedoch ähnlich wie beim Oxyfuel-Prozess direkt nach der Reinigung mit einer Temperatur von ca. 200 °C wieder der Verbrennungskammer (1) zugeführt.

Der Unterschied zu dem vorgenannten Stand der Technik besteht unter anderem darin, dass einerseits die Luft auf der Feedseite der Hochtemperatur-$O_2$-Membran (5) unter Atmosphärendruck zugeführt wird, und dass für den Sauerstoffübergang dann zwangsweise auf der Permeatseite ein Unterdruck eingestellt wird. Somit wird auf der Permeatseite reiner Sauerstoff erzeugt, der anschließend nach Abkühlung und Verdichtung der Verbrennungskammer direkt, oder auch alternativ zunächst dem rezyklierten Rauchgas zugeführt wird. Die Vorwärmung der Luft erfolgt auch hier durch Wärmeübertragung (6) von der aus der Membran austretenden Luft, wobei hier jedoch optional auch noch eine weitere Vorwärmung durch einen externen Brenner (7) oder aber auch durch Vorwärmung durch die Verbrennungskammer (1) selbst erfolgen kann.

Als Beispiele für die Verhältnisse in der Transportmembran bei dieser Betriebsführung für ein Oxycaol-Membrankraftwerk mit einer Hochtemperatur-$O_2$-Membran mit Permeatvakuum (OXYVAC-JÜL) können folgende Richtwerte angegeben werden.

Das Verhältnis der Sauerstoffpartialdrücke $( p_{O_2}^{feed}$ zu $p_{O_2}^{permeat} )$ in der Membran sollte vorteilhaft zwischen 10:1 und 2:1 liegen, wobei insbesondere Werte zischen 7:1 und 3:1 als besonders vorteilhaft angesehen werden.

Zur Abschätzung möglicher Permeatstromdichten im Hinblick auf den Membranflächenbedarf wurden orientierende Messungen an einem Barium-haltigen Perowskiten BSCF5582 (Dicke 1 mm, kein Substrat) durchgeführt. Dabei wurde der Vakuumdruck von 30 mbar näherungsweise simuliert durch die Einstellung von $O_2$-Partialdrücken auf etwa 30 mbar mittels Helium-Spülgas. Eine $O_2$-Flussdichte von 2 $Nm^3/m^2h$ wurde gemessen. Diese liegt bereits in der Größenordnung des Zielwertes (6 $Nm^3/m^2h$).

Dieser erscheint erreichbar einerseits durch Verringerung der Membrandicke und andererseits durch gegebenenfalls Verringerung noch vorhandener größerer und bei Dickenreduzierung dominierend werdender Oberflächenwiderstände mittels Aufrauhung und/oder Dotierung mit katalytisch wirkenden Substanzen.

Abschließend wird zur Veranschaulichung des technischen und ökonomischen Potentials dieser Membran-Kraftwerkstechnologie eine einfache Abschätzung angeführt:

Für den Zielwert einer $O_2$-Flussdichte von 5 $Nm^3/m^2h$ ergibt sich bei einem 1000 MW-Oxycoal-Kraftwerk ($O_2$-Bedarf ca. 200 kg/s, bzw. 140 $Nm^3/s$,

bzw. 500000 $Nm^3/h$) eine Membranfläche von 100.000 $m^2$. In Deutschland sind rund 100 GW Kraftwerksleistung installiert. Würde man diese Kraftwerke durch Oxycoal-Kraftwerke ersetzen und die Membranfläche auf die Anzahl der Einwohner beziehen, so ergäbe sich folgender $O_2$-Membran-Flächenbedarf und -massenbedarf (bei einer Membrandicke von ca. 1 mm):

- ca. 0,1 $m^2$/Einwohner
- ca. 0,5 kg/Einwohner.

Da die installierte Kraftwerksleistung rund 1 kW/Einwohner beträgt, erhält man die gleichen Zahlenwerte für die $O_2$-Membran in Bezug auf 1 kW (installierte Kraftwerksleistung):

- ca. 0,1 $m^2$/kW und
- ca. 0,5 kg/kW.

Membranhersteller schätzen die Investitionskosten bei diesen keramischen Membranen auf ca. 1000 €/$m^2$ für Prototypen und auf 200 €/$m^2$ bei einer Massenproduktion. Für ein 1000 MW-Kraftwerk mit einer Investitionssumme von ca. 1 Mrd. € kämen für den Membranmodul ca. 20 Mio. € hinzu, zuzüglich der Investitionskosten für beispielsweise Wärmetauscher, Vakuumpumpen, $CO_2$-Kompressor und $CO_2$-Pipeline.

## Patentansprüche

1. Verfahren zum Betreiben eines Kraftwerkes, bei dem Kohle mit Hilfe von reinem Sauerstoff, der über ein Membranverfahren aus Luft abgetrennt wird, verbrannt wird, das Verbrennungsgas gereinigt und zum Teil wieder der Verbrennung zugeführt wird, wobei der eingesetzte reine Sauerstoff durch Abtrennung aus Luft mit Hilfe einer Hochtemperatur-$O_2$-Membran erhalten wird, und wobei die Luft vor dem Eintritt in die Hochtemperatur-$O_2$-Membran über einen Wärmetauscher durch die aus der Hochtemperatur-$O_2$-Membran abgeführte Abluft vorgewärmt wird, **dadurch gekennzeichnet,**

   - **dass** auf der Feedseite der Hochtemperaturmembran Gas zu- und abgeführt wird, wobei die Hochtemperatur-$O_2$-Membran feedseitig mit atmosphärischer Luft bis maximal 2 bar betrieben wird,
   - **dass** auf der Permeatseite der Hochtemperaturmembran lediglich Gas abgeführt wird, wobei der in der Hochtemperatur-$O_2$-Membran abgetrennte reine Sauerstoff auf der Permeatseite unter einem Druck zwischen 0,02 bar und 0,5 bar vorliegt,

und

- **dass** der in der Hochtemperatur-$O_2$-Membran abgetrennte Sauerstoff vor dem Eintritt in die Verbrennungskammer abgekühlt und verdichtet wird.

2. Verfahren nach Anspruch 1, bei dem der Unterdruck mit Hilfe einer Vakuumpumpe eingestellt wird.

3. Verfahren nach einem der Ansprüche 1 bis 2, bei dem die Luft zusätzlich durch einen Verbrennungsprozess vor dem Eintritt in die Hochtemperatur-$O_2$-Membran aufgeheizt wird.

4. Verfahren nach einem der Ansprüche 1 bis 2, bei dem das Verhältnis der Sauerstoffpartialdrücke im Feed und im Permeat zwischen 10:1 und 2:1 eingestellt wird, insbesondere zwischen 7:1 und 3:1.

5. Kraftwerk zur Erzeugung elektrischer Energie mit einer Verbrennungskammer (1) zur Erzeugung von Dampf, wenigstens einer nachgeschalteten Rauchgasreinigungsstufe (2), einer Abtrennung für $CO_2$ (3), einer Kreislaufführung für das Rauchgas sowie einer Hochtemperatur-$O_2$-Membran (5), die der Verbrennungskammer (1) vorgeschaltet ist, **dadurch gekennzeichnet,**

- **dass** die Hochtemperatur-$O_2$-Membran (5) feedseitig eine Zuführung und eine Abführung aufweist, die über einen Wärmetauscher (6) thermisch gekoppelt sind,
- **dass** die feedseitige Zuführungsleitung zur Hochtemperatur-$O_2$-Membran (5) ein Kreislaufgebläse (7) aufweist,
- **dass** die Hochtemperatur-$O_2$-Membran (5) permeatseitig nur eine Abführung mit Verbindung zur Verbrennungskammer (1) und/oder der Rauchgaskreislaufführung aufweist, und in dieser Abführung eine Vakuumpumpe als Mittel zur Verdichtung (8) angeordnet ist.

6. Kraftwerk nach Anspruch 5, bei dem in der feedseitigen Zuführung zur Hochtemperatur-$O_2$-Membran (5) ein weiteres Mittel zum Vorheizen des durch die Zuführung in die Hochtemperatur-$O_2$-Membran (5) eingeleiteten Mediums vorgesehen ist.

7. Kraftwerk nach Anspruch 6, bei dem das weitere Mittel zum Vorheizen ein Brenner ist.

8. Kraftwerk nach Anspruch 6, bei dem das weitere Mittel zum Vorheizen die Verbrennungskammer (1) des Kraftwerkes ist.

## Claims

1. Method of operating a power station in which coal is burnt with the aid of pure oxygen which is separated from air by a membrane process, and the combustion gas is purified and some of it is returned to the combustion [chamber],
wherein the pure oxygen used is obtained by separation from air with the aid of a high-temperature 02 membrane, and
wherein before entering the high-temperature 02 membrane, the air is preheated in a heat exchanger by the exhaust air removed from the high-temperature 02 membrane,
**characterized in that**
on the feed side of the high-temperature membrane, gas is both supplied and removed, the feed side of the high-temperature 02 membrane being operated on atmospheric air up to a maximum of 2 bar,
on the permeate side of the high-temperature membrane, gas is removed only, the pure oxygen separated in the high-temperature 02 membrane being at a pressure of between 0.02 bar and 0.5 bar on the permeate side, and
the oxygen separated in the high-temperature 02 membrane is cooled and compressed before it enters the combustion chamber.

2. Method according to Claim 1 in which the partial vacuum is generated by means of a vacuum pump.

3. Method according to either of Claims 1 and 2 in which the the air is additionally heated by a combustion process before it enters the high-temperature 02 membrane.

4. Method according to either of Claims 1 and 2 in which the ratio of the oxygen partial pressures in the feed and in the permeate is set at between 10:1 1 and 2:1, and in particular between 7:1 and 3:1.

5. Power station for the generation of electrical energy, with a combustion chamber (1) for generating steam, at least one downstream flue gas purifying stage (2), a separator for CO2 (3), a circulation system for the flue gas, and a high-temperature 02 membrane (5) upstream of the combustion chamber (1), **characterized in that**
the high-temperature 02 membrane (5) has a supply [system] and a removal [system] on the feed side that are thermally coupled by means of a heat exchanger (6),
the feed-side supply conduit to the high-temperature 02 membrane (5) has a circulating blower (7),
the high-temperature 02 membrane (5) only has a removal [system] on the permeate side, with connection to the combustion chamber (1) and/or to the flue gas circulation installation, and a vacuum pump is arranged in this removal [system] as a means of compression (8).

**6.** Power station according to Claim 5 in which a further means for preheating the medium fed to the high-temperature 02 membrane (5) by the supply [system] is provided in the feed-side supply to the high-temperature 02 membrane (5).

**7.** Power station according to Claim 6 in which the further means for preheating is a burner.

**8.** Power station according to Claim 6 in which the further means for preheating is the combustion chamber (1) of the power station.

**Revendications**

**1.** Procédé pour faire fonctionner une centrale électrique, dans lequel le charbon est brûlé à l'aide d'oxygène pur qui est séparé de l'air par le biais d'un procédé membranaire, le gaz de combustion est purifié et est en partie de nouveau amené à la combustion, l'oxygène pur mis en oeuvre étant obtenu par séparation de l'air à l'aide d'une membrane - $O_2$ à haute température, et
l'air étant préchauffé avant l'entrée dans la membrane - $O_2$ à haute température par le biais d'un échangeur de chaleur grâce à l'air évacué par la membrane - $O_2$ à haute température,
**caractérisé en ce**

- **que** sur le côté alimentation de la membrane à haute température, du gaz est amené et évacué, la membrane - $O_2$ à haute température étant exploitée du côté alimentation avec un air atmosphérique allant jusqu'à 2 bars maximum,
- **que** sur le côté perméat de la membrane à haute température, uniquement du gaz est évacué, l'oxygène pur séparé dans la membrane - $O_2$ à haute température du côté perméat étant présent à une pression située entre 0,02 bar et 0,5 bar, et
- **que** l'oxygène séparé dans la membrane - $O_2$ à haute température étant refroidi et compressé avant l'entrée dans la chambre de combustion.

**2.** Procédé selon la revendication 1, dans lequel la dépression est ajustée à l'aide d'une pompe à vide.

**3.** Procédé selon l'une des revendications 1 à 2, dans lequel l'air est chauffé en plus par un procédé de combustion avant l'entrée dans la membrane - $O_2$ à haute température.

**4.** Procédé selon l'une des revendications 1 à 2, dans lequel le rapport des pressions partielles d'oxygène dans l'alimentation et dans le perméat est ajusté entre 10/1 et 2/1, en particulier entre 7/1 et 3/1.

**5.** Centrale électrique pour la production d'énergie électrique comprenant une chambre de combustion (1) pour la production de vapeur, au moins un étage de purification du gaz de fumées (2) monté en aval, une séparation pour le $CO_2$ (3), un circuit pour le gaz de fumées ainsi qu'une membrane - $O_2$ à haute température (5), qui est placée en amont de la chambre de combustion (1), **caractérisée en ce**

- **que** la membrane - $O_2$ à haute température (5) comprend du côté alimentation une amenée et une évacuation qui sont couplées thermiquement par le biais d'un échangeur de chaleur (6),
- **que** la conduite d'amenée côté alimentation menant à la membrane - $O_2$ à haute température (5) comprend une soufflerie de circulation (7),
- **que** la membrane - $O_2$ à haute température (5) comprend du côté perméat seulement une évacuation avec le raccordement à la chambre de combustion (1) et/ou la conduite de circulation du gaz de fumées, et qu'une pompe à vide est disposée dans cette évacuation comme moyen de compression (8).

**6.** Centrale électrique selon la revendication 5, dans laquelle, dans l'amenée côté alimentation menant à la membrane - $O_2$ à haute température (5), un autre moyen pour le chauffage du milieu introduit par l'amenée dans la membrane - $O_2$ à haute température (5) est prévu.

**7.** Centrale électrique selon la revendication 6, dans laquelle l'autre moyen pour le chauffage est un brûleur.

**8.** Centrale électrique selon la revendication 6, dans laquelle l'autre moyen pour le chauffage est la chambre de combustion (1) de la centrale électrique.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040002030 A1
- US 5753007 A

- EP 1172135 A1